# EUROPÄISCHE PATENTSCHRIFT

(11) **EP 1 249 409 B1**
(45) Veröffentlichungstag und Bekanntmachung des Hinweises auf die Patenterteilung: **11.08.2004**
(21) Anmeldenummer: 02004576.1
(22) Anmeldetag: 28.02.2002
(51) Int. Cl.: B65G 47/91

(54) **Ladevorrichtung mit gezielter Sauggreifersteuerung**
Loading device with a controlled suction gripper
Dispositif de chargement avec des ventouses de préhension controlées

(30) Priorität: 12.04.2001 DE 10118386; 31.10.2001 DE 10153784
(43) Veröffentlichungstag der Anmeldung: 16.10.2002
(73) Patentinhaber: Trumpf Sachsen GmbH, 01902 Neukirch (DE)
(72) Erfinder: Vogel, Klaus, 02681 Kirschau OT Rodewitz (DE)

(56) Entgegenhaltungen:
- EP-A- 0 348 311
- FR-A- 2 217 248
- FR-A- 2 639 335
- GB-A- 2 322 089
- US-A- 6 055 895

## Beschreibung

Die Erfindung betrifft eine Ladevorrichtung für flache Werkstücke und für das Sortieren und Transportieren von aus einem flachen Werkstück geschnittenen Fertigteilen mit gezielter Sauggreifersteuerung.

Beladeeinrichtungen mit Sauggreifern zum Transport von flachen Werkstücken wie Blechen zu einer Bearbeitungsmaschine bzw. zur Ablage auf einen Bearbeitungstisch sind bekannt (DE 3637567 A1). Dazu sind einzelne Sauggreifer in einen Rahmen zu einem Sauggreiferfeld vereinigt. Das Entnehmen der Fertigteile aus dem Restgitter erfolgt manuell.

Aus der OS 3234216 ist es bekannt, zum Entladen von Bearbeitungsmaschinen die Grundeinstellung der Werkstückhalterung gegenüber dem Hubglied zu verändern, indem die Werkstückhalterung bzw. das Hubglied so verschoben wird, dass alle Sauggreifer auf eine Fertigteilfläche aufsetzen. Bei einer größeren Serie von gleichen Fertigteilen sind vor Arbeitsbeginn die einzelnen Sauggreifer manuell so im Sauggreiferfeld anzuordnen, dass sie beim Entladen in der richtigen Position stehen.

Weiterhin ist aus der DE 36 28 381 C2 "Sauggreifer" ein Sauggreiferfeld bekannt, bei dem die Sauggreifer in nebeneinander stehenden Reihen geordnet an aus Rohren bestehenden Saugleitungen befestigt sind. Jede Saugleitung kann über ein Ventil gesondert angesteuert und damit das Sauggreiferfeld entsprechend in seiner Breite oder entsprechend dem Gewicht des Werkstückes eingestellt werden. Eine gezielte Auswahl zur Abnahme von Fertigteilen ist nicht vorgesehen und im Anwendungsfall nur entsprechend den Reihen nicht aber innerhalb der Reihen möglich.

Gleichwirkend ist eine Vorrichtung zum Halten einer Leiterplatte nach DE 196 46 186 A1. Hier wird das Sauggreiferfeld durch eine Schablone vor den Saugkanälen so aufgeteilt, dass nur die Sauggreifer aktiviert sind, die auf glatte Fertigteilflächen aufsetzen. Bei einem Serienwechsel ist auch ein Umstellen der Sauger bzw. ein Schablonenwechsel erforderlich. Ein Entladen unter Änderung des Schneidprogrammes von Werkstück zu Werkstück der Verteilung der Fertigteile entsprechend ist nur unter großem manuellen Aufwand möglich.

Aus der GB -A- 2 322 089 ist eine Auflagefläche für ein Werkstück bekannt, dessen Standfläche uneben ist oder das nur teilweise aufliegen soll. Diese Auflagefläche besteht aus einer Vielzahl von in sich kreuzenden Reihen und Säulen angeordneten Stirnflächen von Kolbenstangen, die von in einem Hauptzylinder geführten Kolben ausgefahren bzw. eingezogen werden können. Dazu sind die in Hauptzylinder und Hilfszylinder geteilten Zylinder mit drei Druckanschlüssen versehen. Am oberen Ende der Hauptzylinder befinden sich zur Absenkung der Kolben die Zylinder in den Reihen miteinander verbindend die Anschlüsse für einen mittleren Druck. Am unteren Ende der Zylinder ist im Hilfszylinder jeweils ein Hilfskolben angeordnet, unter dem sich die Zylinder in den Reihen miteinander verbindende Hochdruckanschlüsse befinden. Oberhalb des Hilfskolbens am Hilfszylinder befinden sich die Zylinder in den Säulen verbindende Niederdruckanschlüsse. Bei angelegten mittleren Druck und Hochdruck bei abgeschaltetem Niederdruck hält die Differenz zwischen dem Hochdruck und dem mittleren Druck die Kolbenstange ausgefahren und durch Verschließen der Hochdruckzuleitung durch den Hilfskolben der mittlere Druck die Kolbenstange auch im eingefahrenen Zustand. Zum Einstellen der Kolbenstangen werden zunächst der mittlere Druck und der Hochdruck abgestellt und die Leitungen geöffnet. Durch Anlegen des Niederdrucks an die Hilfszylinder in den Säulen nacheinander und durch Anlegen der gewünschten höheren Drücke in jeder einzelnen Zeilen, wird die gewünschte Auflagefläche zeilenweise aufgebaut. Bei diesem komplizierten Verfahren wird mit drei verschieden großen, aufeinander abgestimmten Drücken gearbeitet, wobei die Verriegelung der Einstellung der Kolbenstangen nicht direkt, sondern durch die Druckdifferenz bzw. durch Schließen der Hochdruckleitung, also auf zwei verschiedenen indirekten Wegen erfolgt. Ein Sauggreiferfeld wird hier nicht aktiviert.

Ein Gerät zum Ansaugen von Teilen, bei dem sich eine Vielzahl von Sauggreifer in sich kreuzenden Reihen und Säulen zu einer "Matrix" geordnet an der Unterseite eines Vakuumkastens befinden, ist aus EP -A- 0 348 311 bekannt. Jedem Sauggreifer ist ein Magnetventil zugeordnet, über das der Sauggreifer mit dem Inneren des Vakuumkastens verbunden werden kann. Es werden nur ausgewählte Sauggreifer aktiviert, wobei die Auswahl der Sauggreifer bzw. die Ansteuerung ihre Magnetventile nur allgemein entweder mittels einem Computer, mittels einer Berechnung oder mit Hilfe einer Schablone gleichzeitig erfolgt. Dabei ist die Einstellung schwerkraftabhängig. Hier ist auch eine gezielte Einzelansteuerung zur Aktivierung von bestimmten Sauggreifern bei einer geringen Anzahl von Sauggreifern möglich. Je kleiner die zu greifenden, aus einer großen Materialtafel geschnittenen Fertigteile sind, desto kleiner und zahlreicher müssen die

Sauggreifer sein, so dass diese Einzelansteuerung unökonomisch und unübersichtlich unter erhöhten Materialaufwand wird.

Ziel und Aufgabe der Erfindung ist es, eine Ladevorrichtung mit gezielter, einfacher, überschaubarer Sauggreifersteuerung in einem Sauggreiferfeld mit einer Vielzahl von Sauggreifem zu finden, mit der sowohl große Werkstücke wie auch kleine Fertigteile transportiert und sortiert werden können, die ökonomisch durch geringen Materialaufwand und überschaubar aufgebaut ist, und dazu ein modulares Steuersystem zu finden, bei dem die Führungen der Steuerkolben einfach auswechselbar sind.

Die Lösung dieser Aufgabe ist Gegenstand des ersten Patentanspruchs. Weitere vorteilhafte Ausgestaltungen der Erfindung sind Gegenstand der nachfolgenden Patentansprüche.

Die Ladevorrichtung mit gezielter Sauggreifersteuerung enthält ein aus einer Vielzahl von Sauggreifem aufgebautes Sauggreiferfeld. Das Sauggreiferfeld ist in sich kreuzende einzeln ansteuerbare Reihen und Zeilen aufgeteilt. Allen Sauggreifem ist je ein in einer Führung laufender Steuerkolben zugeordnet. Alle Steuerkolben sind unter Lösen einer Verriegelung in eine Ruhestellung bringbar. Jeder Steuerkolben ist einer bestimmten Zeile und Reihe an deren Kreuzpunkt zugeordnet und verbleibt wahlweise in Ruhestellung oder ist in einer Arbeitsstellung verriegelt gehalten. Die Ruhestellung wird in Zeilen nacheinander entriegelt. Sobald die Ruhestellung in einer Zeile entriegelt ist, wird in den Reihen die vorgesehene Arbeitsstellung der Steuerkolben angesteuert und anschließend die Zeile verriegelt. Nach Durchlaufen aller Zeilen des Sauggreiferfeldes ist das Sauggreiferfeld entsprechend der zu greifenden Fertigteile eingestellt, die Sauggreifer werden über die sich in Arbeitsstellung befindlichen Steuerkolben zum Ansaugen aktiviert und über die sich in Ruhestellung befindlichen Steuerkolben durch Abblasen deaktiviert. Dazu sind alle Führungen an eine auf ein Ende des Steuerkolbens wirkende Rücksetzdruckleitung, an eine Saugleitung und an eine Abblasleitung angeschlossen. Der Steuerkolben ist geteilt und hat zum Sauggreifer hin eine wahlweise an die Abblasleitung oder die Saugleitung anschließbare Innenleitung. Eine Verriegelung greift in Aussparungen am Steuerkolben ein. Eine in Reihen wirkende Steuerleitung ist am anderen Ende des Steuerkolbens angeschlossen. Das Sauggreiferfeld ist in gegeneinander verschwenkbare und voneinander trennbare Teilfelder aufgeteilt. Die Teilfelder sind an Parallelogrammgestängen befestigt, zwischen denen sich eine mittig motorisch angetriebene Spindelwelle mit gegenläufiger Steigung befindet, die über je eine gelenkig gelagerte Mutter mit je einem Parallelogrammstab jedes Gestänges verbunden ist, wobei der Antriebsmotor in einer senkrecht zur Spindelwelle stehenden Führung gleitet.

In Weiterführung der Erfindung kann ein modulares Steuersystem für die Ladevorrichtung mit gezielter Sauggreifersteuerung aufgebaut werden. Es besteht aus einer Vielzahl von gleichen, säulenförmigen, an eine Stirnseite einen Anschluss für oder einen Sauggreifer tragenden Führungen mit quadratischen Querschnitt, die durch das Steuersystemfeld begrenzende Spannleisten aneinander gepresst sind. Diese Führungen befinden sich über den Kreuzungspunkten der Reihe mit den Zeilen im Sauggreiferfeld. Die Führungen haben eine Längsbohrung, in der sich der Steuerkolben befindet. Ein gegenüberstehendes Wandpaar der Führung ist von die Zu- und Ableitungen für Steuer- und Arbeitsmedien bildenden Querbohrungen durchbrochen. Die Querbohrungen ergänzen sich im Steuersystemfeld zu Leitungssystemen. Über dem Steuerkolben ist jede Führung als wie ein NAND-Glied wirkender Steuerkopf ausgebildet, der aus einem mit einer Ringnut auf seiner Mantelfläche versehenen und längs durchbohrten Einsatz, einer auf der dem Steuerkolben abgewandten Stirnseite des Einsatzes aufliegenden Dichtungsscheibe, einem über der Dichtungsscheibe befindlichen, über Seitenbohrungen am Leitungssystem für einer Druckverriegelung angeschlossenen Freiraum und einem Verschluss der Längsbohrung in der Führung besteht. Von der Ringnut im Einsatz führt eine Stichbohrung zu der dem Steuerkolben abgewandten Seite des Einsatzes unter die Dichtungsscheibe.

Durch Beaufschlagen des Leitungssystems zur Rückstellung und durch Deaktivieren der Druckluft im Leitungssystem für die Verriegelung werden zum Beginn einer Einstellung im Steuersystemfeld alle Steuerkolben in die Ausgangsstellung gebracht. Anschließend wird Druckluft auf das Leitungssystem zur Verriegelung gegeben und durch Andrücken der Dichtungsscheiben an die Einsätze alle Steuerkolben in der Ausgangsstellung gehalten. Durch zeilenweises Aufheben des Druckes in dem Leistungssystem zur Verriegelung und durch reihenweises ausgewähltes Ansteuern des Leitungssystems zur Steuerung mit Druckluft, werden die ausgewählten Steuerkolben durch Anheben der jeweiligen Dichtungsscheiben aus der Ausgangsstellung in die Zweitstellung geschoben und dort durch Beaufschlagen der Zeile im Leitungssystem zur Verriegelung gehalten.

Die Erfindung soll nachstehend an Hand eines Ausführungsbeispiels näher erläutert werden. Die zugehörige Zeichnung zeigt in
Fig. 1: das Zeilen- und Reihenschema eines Sauggreiferfeldes
Fig. 2: den Steuerkolben für jeden Sauggreifer im Schnitt
Fig. 3: die Teilung eines Sauggreiferfeldes in Seitenansicht
Fig. 4: eine Führung im modularen Steuersystem im Längsschnitt

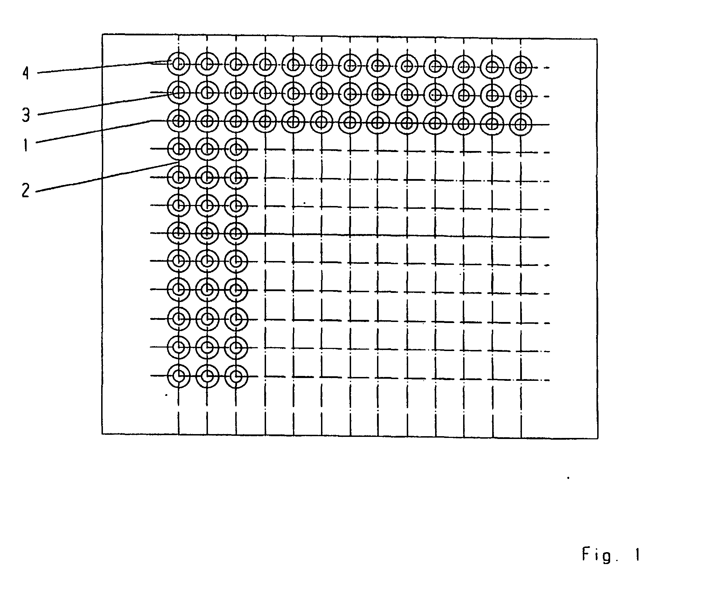

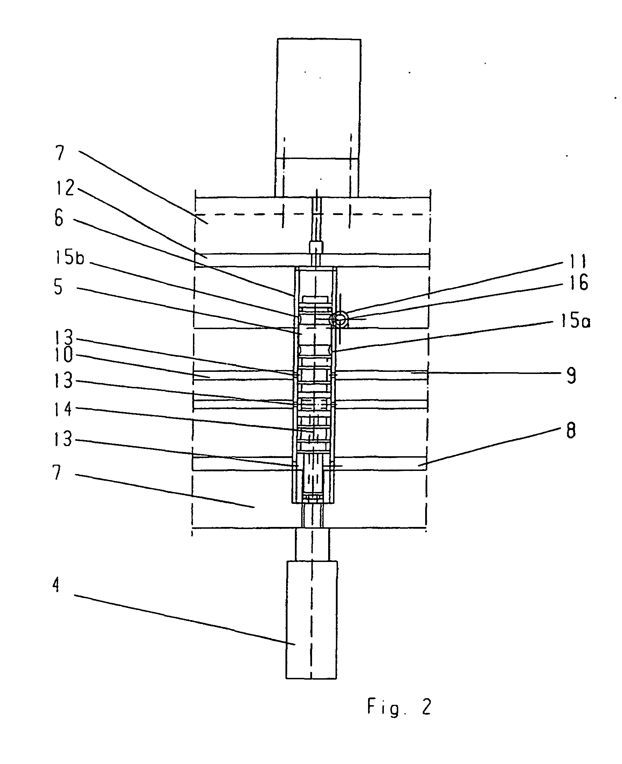

Das in Fig. 1 dargestellte Sauggreiferfeld ist in Reihen 1 und in senkrecht dazu stehende Zeilen 2 aufgeteilt. An jedem Kreuzungspunkt 3 der Reihen 1 mit den Zeilen 2 befindet sich ein Sauggreifer 4. Jedem Sauggreifer 4 ist ein in Fig. 2 im Schnitt dargestellter Steuerkolben 5 zugeordnet, der in einer Führung 6 läuft. Die Sauggreifer 4 sind an einem Träger 7 befestigt. Im Träger 7 sind die Führungen 6 der Steuerkolben 5 gelagert. In dem Träger 7 befinden sich Rücksetzleitungen 8, Saugleitungen 9, Abblasleitungen 10, Verriegelungsleitungen 11 und Steuerleitungen 12, an denen die Führungen 6 über Einlässe 13 angeschlossen sind. In dem Steuerkolben 5 befindet sich eine wahlweise an die Saugleitung 9 oder die Abblasleitung 10 anschließbare Innenleitung 14. Weiterhin sind im Steuerkolben zwei Aussparungen 15 a und 15 b eingesenkt, in die eine von der Verriegelungsleitung 11 angetriebene Sperre 16 bzw. die Verriegelungsleitung 11 mit ihrer elastischen Wandung direkt eingreift. Die Verriegelungsleitungen 11 laufen parallel zu den Zeilen 2, die Steuerleitungen 12 parallel zu den Reihen 1 im Sauggreiferfeld.

Die Verriegelungsleitungen 11 werden vor Beginn der Einstellung des Sauggreiferfeldes gemeinsam angesteuert, so dass die Sperren 16 gelöst sind. Durch Betätigen der Rücksetzleitung 8 werden alle Steuerkolben 5 in die Ruhestellung gebracht. Die Sperren 16 greifen in die Aussparungen 15 a ein. Anschließend werden die Verriegelungsleitungen 11 nacheinander angesteuert. Dabei wird jede Steuerleitung 12 für sich mit Steuerdruck bzw. nicht oder mit Unterdruck beaufschlagt. Die mit Steuerdruck beaufschlagten Steuerleitungen 12 schieben die Steuerkolben 5 in die Arbeitsstellung. Die Sperren 16 greifen dann in die Aussparungen 15 b ein. Die anderen Steuerkolben 5 in dieser entriegelten Zeile 2 verbleiben in Ruhestellung, wobei die Sperren 16 nach dem Weiterschalten zur nächsten Zeile 2 in die Aussparungen 15 a eingreifen. Nach Durchlaufen aller Verriegelungsleitungen 11 ist das Sauggreiferfeld angesteuert. Die in Arbeitsstellung befindlichen Steuerkolben 5 verbinden die Sauggreifer 4 über die Innenleitung 14 mit der Saugleitung. Die in Ruhestellung befindlichen Steuerkolben 5 verbinden die Sauggreifer 4 über die Innenleitung 14 mit der Abblasleitung 10.

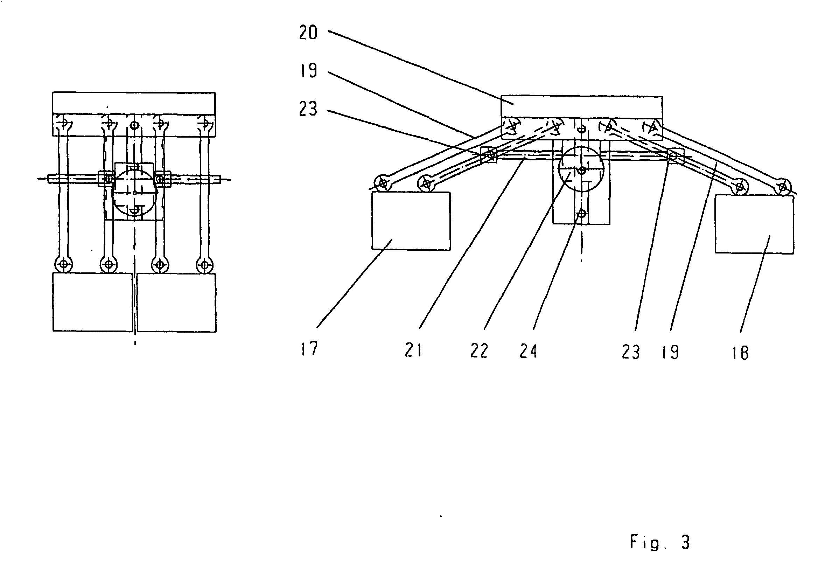

Um größere Werkstücke mit dem Sauggreiferfeld zu transportieren, kann es in Teilfelder 17 und 18, wie in Fig. 3 dargestellt, aufgeteilt sein. Diese Teilfelder 17 und 18 sind an Parallelogrammgestängen 19 beweglich befestigt, die wiederum an einem Lager 20 schwenkbar befestigt sind. Zwischen den Parallelogrammgestängen 19 befindet sich eine Spindelwelle 21, in deren Mitte ein Antriebsmotor 22 angeordnet ist. Die neben dem Antriebsmotor 22 befindlichen Spindeln der Spindelwelle 21 haben gegenläufige Steigung. Sie greifen in Muttern 23 ein, die jeweils an einem Parallelogrammstab des Parallelogrammgestänges 19 gelenkig gelagert sind. Der Antriebsmotor 22 gleitet auf einer senkrecht zu Spindelwelle 21 stehenden Führung 24.

Durch Drehen der Spindelwelle 21 werden die Muttern 23 zur Seite bewegt. Sie schwenken die Parallelogrammgestänge 19, wobei der Antriebsmotor 22 auf der Führung 24 gleitet und die Teilfelder 17 und 18 je nach Drehrichtung der Spindelwelle 21 aufeinander zu oder voneinander fort geschwenkt werden.

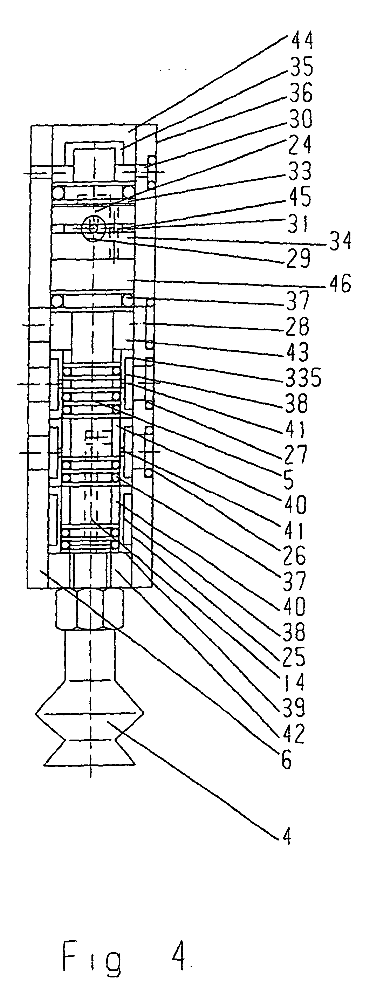

Das modulare Steuersystem ist aus einer Vielzahl von in Fig. 4 dargestellten gleichen, säulenförmigen Führungen 6 mit quadratischem Querschnitt aufgebaut, die von das Steuersystem begrenzenden Spannleisten gegeneinander gepresst werden. Alle Führungen 6 ergänzen sich zum Träger 7, wobei sich jede Führung 6 über einem Kreuzungspunkt 3 der Reihen 1 mit den Zeilen 2 im Sauggreiferfeld befindet. Jede Führung 6 hat eine durchgehende Längsbohrung 25, in der sich ein Steuerkolben 5 befindet. Der Steuerkolben 5 liegt mit Dichtungsringen 37 an Außenringnuten 38 tragenden Passungen 39 an. Zwischen den Dichtungsringen 37 bleibt ein Kolbenraum 40 frei. Die vor in der Führung 6 befindlichen Querbohrungen 26 und 27 für Arbeitsmedien befindlichen Passungen 39 sind von Verbindungsbohrungen 41 von der Außennut 38 nach innen hin durchbrochen. Am unteren Ende ist die Längsbohrung 25 durch einen Ringeinsatz 42, der einen Sauggreifer 4 trägt, abgeschlossen.

Im Steuerkolben 5 befindet sich die Innenleitung 14 vom Kolbenraum 40 zum Sauggreifer 4. Oberhalb der Querbohrungen 26 und 27 befindet sich eine Rückstellungsbohrung 28 , die einen oberen Rückstellkolbenraum 43 mit einer Rückstellung verbindet. Über dem Steuerkolben ist die Führung 6 zu einem Steuerkopf 36 ausgebaut. Die Querbohrung 29 befindet sich als einzige Bohrung 29 an den freien Seiten der Führung 6 und steht um 90 ° gedreht zu den Querbohrungen 26, 27 und 28. Der Steuerkopf 36 besteht aus einem Einsatz 34 in der Längsbohrung 25, eine auf dem Einsatz 34 aufliegenden Dichtungsscheibe 33 und einem Verschluss 44 der Längsbohrung 25 . In dem Einsatz 34 ist eine Ringnut 31 eingesenkt, die mit der Querbohrung 29 korrespondiert. Der Einsatz 34 hat eine Längsbohrung 45, die zu einem Hubraum 46 über dem Steuerkolben 5 führt. Von der Ringnut 31 führt eine Stichbohrung 32 zu der von der Dichtungsscheibe 33 abgedeckten Fläche des Einsatzes 34. Über der Dichtungsscheibe 33 ist ein Freiraum 35, in den Seitenbohrungen 30 in der Führung 6 münden. Vor Beginn der Einstellung der einzelnen Sauggreifer 4 zum Ansaugen oder Abblasen werden durch Aktivieren der Rückstellung über die Rückstellleitungsbohrung 28 alle Steuerkolben 5 in die Ausgangstellung gebracht. Dazu werden alle Verriegelungen durch Deaktivieren der Verriegelung über die Seitenbohrungen aufgehoben.

Die Austeuerung der Steuerkolben geschieht durch zeilenweises Aufheben der Verriegelung im Steuersystemfeld und gleichzeitiger Abgabe von Steuerdruck in ausgewählten Reihen auf die Querbohrung 29. Dieser Steuerdruck hebt in dem jeweiligen ausgewählten Steuerkopf 36 über die Ringnut 31 und die Stichbohrung 32 die Dichtungsscheibe 33 an und schiebt den Steuerkolben 5 über die Längsbohrung 45 aus der Ausgangsstellung in die Zweitstellung, in der der Steuerkolben 5 nun durch nachfolgende Druckbeaufschlagung auf die Seitenbohrungen 30 in der Zeile gehalten wird.

## Patentansprüche

1. Ladevorrichtung mit gezielter Sauggreifersteuerung, ein aus einer Vielzahl von Sauggreifern (4) aufgebautes Sauggreiferfeld enthaltend, **dadurch gekennzeichnet, dass** das teilbare Sauggreiferfeld (17,18) in sich kreuzende einzeln ansteuerbare Reihen (1) und Zeilen (2) von Sauggreifern (4) und zugeordneten Steuerkolben (5) aufgeteilt ist, wobei jeder Zeile (2) eine parallel dazu verlaufende Verriegelungsleitung (11), welche entweder unmittelbar zur Verriegelung des Steuerkolbens (5) dient oder eine Sperre zur Verriegelung des Steuerkolbens (5) antreibt, und jeder Reihe eine parallel laufende Steuerleitung (12) zugeordnet ist, dass alle Steuerkolben (5) unter Lösen einer Sperre (16) in Ruhestellung bringbar sind, dass jeder Steuerkolben (5) einer bestimmten Zeile (2) und Reihe (1) an deren Kreuzpunkt (3) zugeordnet wahlweise in Ruhestellung verbleibend oder in einer Arbeitsstellung verriegelt gehalten ist, wobei die Ruhestellung in Zeilen (2) nacheinander entriegelbar, dabei die Arbeitsstellung der Steuerkolben (5) in Reihen (1) mittels der zugehörigen mit Steuerdruck beaufschlagten Steuerleitung (12) ansteuerbar, der Steuerkolben (5) in Arbeitsstellung schiebbar und danach die Zeile (2) verriegelbar ist, und dass nach Durchlaufen aller Zeilen (2) des Sauggreiferfeldes (17,18) die Sauggreifer (4) über die sich in Arbeitsstellung befindlichen Steuerkolben (5) zum Ansaugen aktiviert und über die sich in Ruhestellung befindlichen Steuerkolben (5) durch Abblasen deaktiviert werden.

2. Ladevorrichtung nach Anspruch 1, **dadurch gekennzeichnet, dass** jedem Sauggreifer (4) ein in einer Führung (6) laufender Steuerkolben (5) zugeordnet ist, dass alle Führungen (6) an eine auf ein Ende des Steuerkolbens (5) wirkende Rücksetzleitung (8), an eine Saugleitung (9) und an eine Abblasleitung (10) angeschlossen sind, dass der Steuerkolben (5) geteilt ist und zum Sauggreifer (4) hin eine wahlweise an die Abblasleitung (10) oder die Saugleitung (9) anschließbare Innenleitung (14) hat, dass eine Sperre (16) in Aussparungen (15a, 15b) am Steuerkolben (5) angreift und dass eine in Reihen (1) wirkende Steuerleitung (12) am anderen Ende des Steuerkolbens (5) angeschlossen ist.

3. Ladevorrichtung nach Anspruch 2, **dadurch gekennzeichnet dass** ein modulares Steuersystemfeld aus einer Vielzahl von gleichen, säulenförmigen, an einer Stirnseite einen Anschluss oder einen Sauggreifer (4) tragenden Führungen (6) mit quadratischem Querschnitt besteht, die durch das Steuersystemfeld als Rahmen begrenzende Spannleisten aneinander gepresst sind, dass die Führungen (6) mit einer einen Steuerkolben (5) aufnehmende Längsbohrung (25) versehen sind, dass die Führungen (6) von die Zu- und Ableitungen für Steuer- und Arbeitsmedien bildenden, sich im Steuersystemfeld zu Leitungssystemen ergänzenden Querbohrungen (26, 27, 28, 29, 30) durchbrochen sind, wobei sich zwischen den aneinander gepreßten Führungen (6) die vom Sauggreifer her nächsten Querbohrungen (26) zur Saugleitung (9), die darauf folgenden Querbohrungen (27) zur Abblasleitung (10), die Rückstellungsbohrungen (28) zur Rücksetzleitung (8), die um 90° gedrehten Querbohrungen (29) zur Steuerleitung (12) und die am Ende der Führungen befindlichen Querbohrungen (30) zur Verriegelungsleitung (11) ergänzen, dass sich in jeder Führung (6) über dem Steuerkolben (5) eine mit einer Querbohrung (29) korrespondierende Ringnut (31) tragender, in Achsrichtung durchbohrter und mit einer Verbindung (32) der Ringnut (31) zu der dem Steuerkolben (5) abgewandten, und von einer Dichtungsscheibe (33) abgedeckten Kreisfläche versehener Einsatz (34) in der Längsbohrung (25) befindet und dass die Längsbohrung (25) über dem Einsatz (34) und der Dichtungsscheibe (33) einen an Seitenbohrungen (30) angeschlossenen Freiraum (35) bildend verschlossen ist.

4. Ladevorrichtung nach Anspruch 3, **dadurch gekennzeichnet, dass** der Sauggreifer (4) direkt am Steuerkolben (5) befestigt ist.

5. Ladevorrichtung nach Anspruch 3, **dadurch gekennzeichnet, dass** sich die von Steuerkolben (5) gesteuerte Arbeitsmedienversorgung für den Sauggreifer (4) in einen Teil der Führung (6) und die Steuerung des Steuerkolbens (5) als ein NAND-Glied bildender Steuerkopf (36) im anderen Teil der Führung (6) befindet, und dass im Steuerkopf (36) eine Querbohrung (29) gegenüber den anderen Querbohrungen (26, 27, und 28) in der Führung (6) um 90 ° gedreht verläuft.

6. Ladevorrichtung nach Anspruch 3, **dadurch gekennzeichnet, dass** sich am Steuerkopf (36) einseitig auf den Querbohrungen (26, 27 und 28) tragenden Wand eine waagerechte Nut befindet, die durch eine Bohrung mit der Ringnut (31) im Einsatz (34) verbunden ist.

7. Ladevorrichtung nach Anspruch 3, **dadurch gekennzeichnet, dass** die Rückstellung des Steuerkolbens (5) durch Beaufschlagen der Verriegelung und anschließend der Steuerung der Reihen mit Vakuum erfolgt.

8. Ladevorrichtung nach Anspruch 1, **dadurch gekennzeichnet, dass** das Sauggreiferfeld (17, 18) in gegeneinander verschwenkbare und voneinander trennbare Teilfelder (17), (18) aufgeteilt ist.

9. Ladevorrichtung nach Anspruch 8, **dadurch gekennzeichnet, dass** die Teilfelder (17), (18) an Parallelogrammgestängen (19) befestigt sind, zwischen denen sich eine mittig motorisch angetriebene Spindelwelle (21) mit gegenläufiger Steigung befindet, die über je eine gelenkig gelagerte Mutter (23) mit je einem Parallelogrammstab jedes Parallelogrammgestänges (19) verbunden ist, wobei ein Antriebsmotor (22) in einer senkrecht zur Spindelwelle (21) stehenden Führung (24) gleitet.

## Claims

1. Loading device with targeted suction gripper control containing a suction gripper array made up of a multitude of suction grippers (4), **characterized in that** the divisible suction gripper array (17, 18) is divided into intersecting individually selectable rows (1) and lines (2) of suction grippers (4) and assigned control plungers (5), each line (2) being assigned a locking line (11) running in parallel therewith, which either serves to directly lock the control plunger (5) or to drive a device to lock the control plunger (5), and each row being assigned a control line (12) running in parallel therewith, that all control plungers (5) can be brought to a resting position by disengaging a locking device (16), that each control plunger (5) of a definite line (2) and row (1) assigned to its intersection point (3) alternatively remains in its resting position or is held locked in a working position, the resting position in lines (2) being unlockable one after the other, with the working position of the control plungers (5) in rows (1) being controllable by the associated control line (12) carrying a control pressure, the control plunger (5) being movable to its working position and then the line (2) being lockable, and that, after all lines (2) of the suction gripper array (17, 18) have passed through, the suction grippers (4) are activated for suction by the control plungers (5) being in their working positions and being deactivated by blowing off via the control plungers (5) being in their resting positions.

2. Loading device according to claim 1, **characterized in that** each suction gripper (4) is assigned a control plunger (5) running in a guide (6), that all guides (6) are connected with a resetting line (8) acting on one end of the control plunger (5) and connected to a suction line (9) and to a blow-off line (10), that the control plunger (5) is split and, in the direction of the suction gripper (4), has an internal line (14) which can alternatively be connected to the blow-off line (10) or to the suction line (9), that a locking device (16) engages into recesses (15a, 15b) on the control plunger (5), and that a control line (12) being active in rows (1) is connected to the other end of the control plunger (5).

3. Loading device according to claim 2, **characterized in that** a modular control system field consists of a multitude of equal, column-shaped guides (6) with square cross sections carrying a connection port or a suction gripper (4) at one face end and being pressed against one another by the control system field as frame-limiting tensioning bars, that the guides (6) are provided with a longitudinal bore (25) taking up a control plunger (5), that the guides (6) are penetrated by cross bores (26, 27, 28, 29, 30) forming the incoming and outgoing lines for the control and working media and completing into lines systems in the control system field, the cross bores (26) nearest to the suction line (9) seen from the suction gripper, the subsequent cross bores (27) to the blow-off line (10), the resetting bores (28) to the resetting line (8), the cross bores (29) turned by 90° and leading to the control line (12), and the cross bores (30) located at the end of the guides and leading to the locking line (11) completing between the guides (6) being pressed against one another, that in each guide (6) above the control plunger (5), an insert (34), which bears an annular groove (31) corresponding with a cross bore (29), and which has been bored through in axial direction and provided with a connection (32) from the annular groove (31) to the circular area being opposite to the control plunger (5) and covered by a seal (33), is located in the longitudinal bore (25), and that said longitudinal bore (25) is closed above the insert (34) and the seal (33), forming a free space (35) adjacent to side bores (30).

4. Loading device according to claim 3, **characterized in that** the suction gripper (4) is directly mounted to the control plunger (5).

5. Loading device according to claim 3, **characterized in that** the working medium supply for the suction gripper (4) controlled by control plungers (5) is located in one part of the guide (6) and the control of the plunger (5) as a control head forming a NAND element (36) is located in the other part of the guide (6), and that a cross bore (29) offset by 90° as compared with the other cross bores (26, 27 and 28) in the guide runs in the control head (36).

6. Loading device according to claim 3, **characterized in that** a horizontal groove is located on the control head (36) on one side of the wall bearing cross bores (26, 27 and 28) and which is connected with the annular groove (31) in the insert (34) by a bore.

7. Loading device according to claim 3, **characterized in that** the resetting of the control plunger (5) is effected by applying vacuum to the lock and subsequently to the row control mechanism.

8. Loading device according to claim 1, **characterized in that** the suction gripper array (17, 18) is divided into partial arrays (17), (18) which can be swung against each other and separated from each other.

9. Loading device according to claim 8, **characterized in that** the partial arrays (17), (18) are fixed to link bars of a parallelogram (19), between which a centrally arranged motor-driven leadscrew (21) with opposed threads is located, which, in each case, is connected by one articulated nut (23) each with one parallel bar of each parallelogram (19), a drive motor (22) sliding within a guide (24) being vertical to the leadscrew (21).

## Revendications

1. Dispositif de chargement avec commande ciblée de ventouses de préhension, contenant un module à ventouses de préhension comprenant un grand nombre de ventouses de préhension (4), qui se distingue par le fait que le module à ventouses de préhension divisible (17, 18) est subdivisé en rangées (1) et lignes (2) de ventouses de préhension (4) se croisant et pilotables individuellement et des pistons de commande (5) qui leurs sont attribués, chaque ligne (2) se voit attribuer une conduite de verrouillage (11) qui lui est parallèle et qui sert soit directement au verrouillage du piston de commande (5) ou entraîne un dispositif d'arrêt destiné au verrouillage du piston de commande (5), et chaque rangée se voit attribuer une conduite de pilotage (12) qui lui est parallèle, que tous les pistons de commande (5) peuvent être amenés en position de repos par relâchement d'un dispositif d'arrêt (16), que chaque piston de commande (5) d'une ligne (2) et rangée (1) déterminée est optionellement maintenu en position de repos ou verrouillé en position de travail, la position de repos dans la ligne (2) étant successivement déverrouillable, la position de travail des pistons de commande (5) dans la rangée (1) étant alors pilotable moyennant la conduite de pilotage correspondante mise sous pression de commande, et que après que toutes les lignes (2) du module à ventouses (17,18) ont été parcourues, les ventouses de préhensions (4) sont activées à l'aspiration moyennant les pistons de commande (5) se trouvant en position de travail et déactivés par échappement d'air moyennant les pistons de commande (5) se trouvant en position de repos.

2. Dispositif de chargement selon demande 1 qui se distingue par le fait qu'à chaque ventouse de préhension (4) est attribué en piston de commande (5) se déplaçant dans un guidage (6), que tous les guidages (6) sont raccordées à une conduite de remise à l'état initial (8) agissant sur une extrémité du piston (5) , à une conduite d'aspiration (9) et à une conduite d'échappement (10), que le piston de commande (5) est partagé et possède vers la ventouse de préhension (4) une conduite interne (14) qui peut au choix être raccordée à la conduite d'échappement (10) ou à la conduite d'aspiration (9), qu'un dispositif d'arrêt (6) agit dans des évidements (15a, 15b) au piston de commande (5) et qu'une conduite de pilotage (12) agissant dans les rangées (1) est raccordée à l'autre extémité du pison de commande (5).

3. Dispositif de chargement selon demande 1 qui se distingue par le fait qu'un module de système de pilotage modulaire composé d'un grand nombre de guidages (6) de section rectangulaire identiques, en forme de colonne, portant sur sa face frontale un branchement ou une ventouse de préhension (4) pressés les uns contre les autres par le module de système de pilotage dont les barres de tension forment cadre de limitation, que les guidages (6) sont pourvus d'un alésage longitudinal (25) pour recevoir un piston de commande (5), que les guidages (6) les alésages transversaux (26, 27, 28, 29, 30)formant conduites d'amenage et d'évacuation pour fluides de commande et de travail se complétant en systèmes de conduites dans le module de système de pilotage sont percés, les alésages les plus proches (26) vu de la ventouse de préhension se complétant en conduite d'aspiration (9) entre les guidages pressés les uns contre les autres, les alésages transversaux suivants (27) en conduite d'échappement (10), les alésages de remise à l'état initial (28) en conduite de remise à l'état initial (8), les alésages transversaux décalés de 90° (29) en conduite de pilotage (12) et les alésages transversaux se trouvant à l'extrémité des guidages (30) en conduite de verrouillage (11), que dans chaque guidage (6) au dessus du piston de commande (5) une insertion (34) présentant une rainure annulaire (31) correspondant avec un alésage transversal (29), transpercée dans le sens axial et avec une liaison (32) de la rainure annulaire ( 31) avec une surface circulaire recouverte d'un joint tournée à l'opposé du piston de commande (5) se trouve dans l'alésage longitudinal (25) et que l'alésage longitudinal (25) formant un espace libre (35) raccordé à des alésages latéraux (25) moyennant l'insertion (34) et le joint (33) est clos.

4. Dispositif de chargement selon demande 3 qui se distingue par le fait que la ventouse de préhension (4) est solidaire du piston de commande (5).

5. Dispositif de chargement selon demande 3 qui se distingue par le fait que l'alimentation en fluide de travail pour la ventouse de préhension (4) pilotée par le piston de commande (5) se trouve dans une partie du guidage (6) et la commande du piston de commande (5) comme tête de pilotage (36) formant élément opérateur NON-ET dans l'autre partie du guidage(6) et qu'un alésage transversal (29) dans la tête de pilotage (36) est décalé de 90° par rapports aux autres alésages (26, 27 et 28) dans le guidage (6).

6. Dispositif de chargement selon demande 3 qui se distingue par le fait qu'il y a à la tête de pilotage (36) unilatéralement sur la paroi portant des alésages transversaux (26, 27 et 28) une rainure horizontale qui est reliée à la rainure annulaire (312) dans l'insertion (34) par un alésage.

7. Dispositif de chargement selon demande 3 qui se distingue par le fait que la remise à l'état initial du piston de commande (5) se fait par sollicitation du verrouillage suivie du pilotage des rangées à l'aide du vide.

8. Dispositif de chargement selon demande 1 qui se distingue par le fait que le module à ventouses de préhension (17, 18) est réparti en champs partiels orientables à l'opposé l'un de l'autre et séparables l'un de l'autre (17), (18).

9. Dispositif de chargement selon demande 8 qui se distingue par le fait que les modules de ventouses de préhension partiels (17), (18) sont fixés à des tringleries formant parallélogramme (19) entre lesquelles se trouve une vis entraînée par moteur à pas opposé associée à respectivement une barre de parallélogramme de chaque tringlerie en parallélogramme (19) moyennant respectivement un écrou articulé, le moteur d'entraînement (22) glissant dans des glissières perpendiculaires à la vis (21).
